# EUROPÄISCHE PATENTSCHRIFT

(11) **EP 1 555 704 B1**
(45) Veröffentlichungstag und Bekanntmachung des Hinweises auf die Patenterteilung: **06.01.2010**
(21) Anmeldenummer: 04027728.7
(22) Anmeldetag: 23.11.2004
(51) Int. Cl.: H01M 2/26, H01M 10/04

(54) **Akkumulator und Verfahren zur Herstellung des selben**
Storage battery and method of manufacturing the same
Accumulateur et méthode de sa fabrication

(30) Priorität: 14.01.2004 DE 102004001876
(43) Veröffentlichungstag der Anmeldung: 20.07.2005
(73) Patentinhaber: Johnson Controls Hybrid and Recycling GmbH, 30419 Hannover (DE)
(72) Erfinder: Wiepen, Rolf, 58239 Schwerte (DE)
(74) Vertreter: Gerstein, Hans Joachim

(56) Entgegenhaltungen:
- WO-A-95/31012
- DE-A1- 19 532 896
- FR-A- 2 748 606
- US-A- 1 116 456
- US-A- 3 844 841
- US-A- 4 646 430

## Beschreibung

Die Erfindung betrifft einen Akkumulator mit einer Mehrzahl von Zellen, die jeweils eine Vielzahl alternierend nebeneinander und mit Separatoren elektrisch getrennt voneinander angeordnete positive und negative Elektrodenplatten mit Ableiterfahnen haben, wobei die gebündelten Ableiterfahnen der positiven Elektrodenplatten einer Zelle elektrisch miteinander verbunden und mit einem Polableiter versehen sind und die gebündelten Ableiterfahnen der negativen Elektrodenplatten einer Zelle elektrisch miteinander verbunden und mit einem Polableiter versehen sind.

Die Erfindung betrifft weiterhin ein Verfahren zur Herstellung eines derartigen Akkumulators mit den Schritten:
- alternierendes Anordnen von positiven und negativen Elektrodenplatten nebeneinander, jeweils getrennt mit einem Separator voneinander zur Bildung jeweils eines Elektrodenplattenstapels pro Zelle, und
- Abkanten der gleichförmigen integral mit den Elektrodenplatten verbundenen Ableiterfahnen zur Bildung von Ableiterfahnenbündeln für die positiven Elektrodenplatten einer Zelle und für die negativen Elektrodenplatten einer Zelle.

Die Anforderung an die elektrische Lade- und Entladeleistungen von Akkumulatoren für Fahrzeuganwendungen sind besonders hoch. Dies gilt insbesondere für moderne Hybridfahrzeuge, bei denen aus verhältnismäßig kleinen Speicherbatterien hohe Entladeströme zum Beispiel beim Beschleunigen gefordert werden. Da Hybridfahrzeuge durch geringeren Treibstoffverbrauch vor allem auf eine Verbesserung der Wirtschaftlichkeit zielen, ist ein hocheffizientes Batteriesystem eine grundlegende Voraussetzung. Die Energieverluste zwischen entnehmbarer und beim Laden aufgewandter Energie sind aus diesem Grund so niedrig wie möglich zu halten. Einer der wesentlichen Verlustfaktoren in Akkumulatorverbänden ist die Anbindung der Elektrodenpakete in den einzelnen Zellen an die Poldurchführungen beziehungsweise deren Anbindungen an die Zwischenzellverbinder. Eine elektrisch hochleitfähige Verbindung mit guter langzeitstabiler mechanischer Stabilität ist notwendig, um langfristig eine hohe Energieeffizienz des Batteriesystems sicherzustellen.

Aus dem US-Patent 3,844,841 und der DE 698 00 524 T4 sind Akkumulatoren bekannt, bei denen die einzelnen Elektroden an ihrer Oberkante mit Ableiterfahnen versehen sind, die im Bereich ihrer größten flächenhaften Ausformung ein kreisförmiges Loch aufweisen. Beim Zusammenbau der elektrochemischen Zelle (beispielsweise Nickel-Cadmium oder Nickel-Eisen) werden abwechselnd Elektroden positiver und negativer Polarität durch einen faserförmigen Separator elektrisch voneinander isoliert übereinander gestapelt. Dabei weisen die positiven Ableiterfahnen und die negativen Ableiterfahnen in entgegengesetzte Richtung. Die Fahnen und damit auch die Gesamtelektroden werden durch eine positive und eine negative Polbrücke mechanisch geführt, die als zylinderförmige Bolzen alle Löcher der Ableiterfahnen gleicher Polarität durchdringen. An ihrem Ende weisen diese zylinderförmigen Bolzen ein Gewinde auf. Durch Aufsetzen einer Schraubenmutter am Polende werden die Ableiterfahnen fixiert.

Damit die Ableiterfahnen gebündelt und die Bohrungen der Ableiterfahnen fluchtend zueinander ausgerichtet werden können, müssen die Ableiterfahnen vor der Stapelung mechanisch abgewinkelt werden und unterschiedliche Längen aufweisen. Dies macht eine Vielzahl verschiedener Elektrodentypen notwendig und die Fertigung wegen der Handhabung vieler mechanischer verschiedener Teile umständlich und teuer.

Für Elektrodenanordnungen mit relativ wenigen Einzelelektroden ist auch bekannt, die Zwischenräume zwischen den Ableiterfahnen durch ringförmige Zwischenscheiben auszufüllen, um eine mechanisch stabile und elektrisch hochleitfähige Kollektorstruktur zu schaffen. Durch Anziehen der Abschlussmuttern werden die Ableiterfahnen der Einzelelektroden zusammen mit den Zwischenscheiben elektrisch leitend fest verbunden. In der ungefähren geometrischen Mitte der Polbrücke wird anstelle einer Zwischenscheibe ein Polbolzen angeordnet, dessen unteres Ende ebenso wie die Zwischenscheiben eine zentrische Öffnung aufweist. Der Polbolzen ragt senkrecht über das Ableiterfahnenbündel aus dem Elektrodenpaket hinaus und sorgt für die elektrische Ableitung des Stroms aus der Zelle nach außen.

Die gasdichte elektrische Durchführung des Polbolzens aus dem Gehäuse nach außen wird durch eine Anordnung von Isolier-, Dichtungs- und Schraubelementen erreicht, so dass kein Gas vom Inneren der Zelle nach außen beziehungsweise kein Gas von außen über die Durchführung in das Innere der Zelle eindringen kann.

Die elektrische Verbindung der Zellen eines Batterieverbandes untereinander erfolgt durch Zellverbinder, die im außerhalb der Zelle befindlichen Teil des Polbolzen mechanisch angebracht werden. Alternativ sind auch Ausführungsformen beispielsweise aus dem genannten US-Patent 3,844,841 und der DE 698 00 524 T2 bekannt, bei dem ein Polableiter, der ein Ableiterfahnenbündel elektrisch kontaktiert, durch die Trennwand benachbarter Zellen geführt ist.

In der US 4,646,430 wird ein Elektrodenplattenstapel für einen Akkumulator offenbart, bei dem die Ableiterfahnen der positiven Elektrodenplatten und der negativen Elektrodenplatten jeweils gebündelt werden. Die gebündelten Ableiterfahnen werden mittels einer Klemme zusammengepresst und weisen eine Öffnung auf, durch die ein Metallrohr geschoben werden kann, um mehrere solcher Elektrodenplattenstapel mit einem Polleiter zu verbinden. So weist das Metallrohr an dem einen Ende eine Gewindemutter auf, mit der die Ableiterfahnen auf dem Metallrohr zusammengepresst werden können. Nachteilig dabei ist, dass die Elektrodenplatten zunächst außerhalb des Gehäuses des Akkumulators auf das Metallrohr geschoben werden müssen und dort entsprechend zusammen gebaut werden müssen, bevor sie in das Akkumulatorgehäuse eingebaut werden können. Dies ist insbesondere im Sinne der Herstellungseffizienz besonders nachteilig.

Des Weiteren offenbart die GB 1,116,456 einen Elektrodenplattenstapel für Akkumulatoren, bei dem die einzelnen Elektrodenplatten im oberen Bereich mit einer Verbindungsleiste elektrisch kontaktiert werden. Auf der Verbindungsleiste ist ein U-förmiges Element angeordnet, das zur Aufnahme einer Verbindungsbrücke vorgesehen ist. Mittels dieser Verbindungsbrücke kann nun der Plattenstapel der benachbarten Zelle, welcher ebenfalls eine solche Anordnung aufweist, elektrisch kontaktiert werden, in dem die Verbindungsbrücke mit den U-förmigen Elementen z. B. "verschweißt" wird. Nachteilig dabei ist auch hier, dass die Herstellung wesentlich erschwert wird, zumal keine lösbare Verbindung vorgesehen ist.

Aufgabe der Erfindung ist es, einen verbesserten Akkumulator mit einer Mehrzahl von Zellen zu schaffen, der einfacher und kostengünstiger in der Herstellung ist und dennoch eine langzeitstabile, elektrisch hochleitfähige Verbindung der Ableiterfahnenbündel im Zellverband gewährleistet.

Die Aufgabe wird mit dem gattungsgemäßen Akkumulator erfindungsgemäß dadurch gelöst, dass die gebündelten Ableiterfahnen eine schlitzartige Ausnehmung mit U-förmiger Kontur zur Aufnahme eines auf das Ableiterfahnenbündel aufsetzbaren Polableiters haben und der Polableiter einen Klemmschuh mit zwei relativ zueinander mit einer Spannschraube beweglichen Spannplatten hat, wobei die Spannschraube in die U-förmige Kontur der schlitzartigen Ausnehmung des Ableiterfahnenbündels einsteckbar ist.

Durch die schlitzartige Ausnehmung mit der U-förmigen Kontur kann die Ausrichtung der Ableiterfahnen eines Ableiterfahnenbündels vereinfacht werden, und es ist möglich, den als Klemmschuh ausgebildeten Polableiter einfach auf die Aufnahmekontur so aufzusetzen, dass die Spannschraube in die U-förmige Kontur hineingleitet. Anschließend wird der Klemmschuh durch Anziehen der Spannplatten mit Hilfe der Spannschraube relativ zueinander auf das Ableiterfahnenbündel gepresst.

Aufgabe der Erfindung ist es weiterhin, ein verbessertes Verfahren zur kostengünstigeren und schnelleren Herstellung eines solchen Akkumulators zu schaffen.

Die Aufgabe wird mit dem gattungsgemäßen Verfahren erfindungsgemäß gelöst durch
- Ablängen der Ableiterfahnenbündel derart, dass jedes Ableiterfahnenbündel eine ebene Anschlussfläche erhält;
- Einbringen von schlitzartigen Ausnehmungen mit U-förmiger Kontur in die Ableiterfahnenbündel;
- Einsetzen eines Polableiters auf ein zugeordnetes Ableiterfahnenbündel mit einem Klemmschuh, der zwei relativ zueinander mit einer Spannschraube bewegliche Spannplatten hat; und
- Anpressen der Spannplatten mit Hilfe der Spannschraube an das Ableiterfahnenbündel.

Es wird deutlich, dass mit dem Verfahren Elektrodenplatten mit gleichartigen Ableiterfahnen gestapelt werden können, die nach dem Stapeln zur Bildung eines Ableiterfahnenbündels abgekantet und anschließend abgelängt werden. Erst anschließend wird die U-förmige Kontur in das abgelängte Ableiterfahnenbündel eingebracht, beispielsweise durch Laserschneiden, so dass eine Ausrichtung von Bohrungen entfällt. Anschließend kann der Klemmschuh eines Polableiters einfach auf das Ableiterfahnenbündel aufgesetzt werden, wobei die Spannschraube in die U-förmige Kontur hineingleitet und die Spannplatten mit der Spannschraube an das Ableiterfahnenbündel angepresst werden.

In einer bevorzugten Ausführungsform hat der Polableiter eine abgewinkelte Anlageplatte, wobei ein erster Schenkel der Anlageplatte eine Spannplatte bildet und eine Bohrung zur Aufnahme der Spannschraube hat. Der andere zweite Schenkel ist integral mit einem senkrecht von dem anderen Schenkel hervorragenden Polbolzen verbunden. Alternativ kann der zweite Schenkel integral mit einem sich quer von dem zweiten Schenkel weg erstreckenden Zellverbinderelement verbunden sein, das wiederum mit der abgewinkelten Ablageplatte eines zweiten Polableiters für eine zugeordnete weitere Zelle verbunden ist.

Für diesen Fall, dass der Polableiter als Zellverbinder für zwei Elektrodenplattengruppen zugeordneter Zellen ausgebildet ist, hat der Polableiter vorzugsweise jeweils eine abgewinkelte Anlageplatte pro Zelle, die einen ersten eine Spannplatte bildenden Schenkel mit einer Bohrung zur Aufnahme der Spannschraube und einen sich recht winklig zum ersten Schenkel erstreckenden zweiten Schenkel hat. Die zweiten Schenkel der beiden Anlageplatten eines Polableiters sind seitlich integral mit einem die beiden Schenkel verbindenden Zellverbinderelement geformt.

Die Erfindung wird nachfolgend anhand der beigefügten Zeichnungen näher erläutert. Es zeigen:
- Figur 1 -: Schnittansicht eines Elektrodenplattenstapels einer Zelle mit abgewinkelten Ableiterfahnen sowie Explosionsansicht;
- Figur 2 -: Seitenansicht auf die Elektrodenplattenstapel mit in entgegensetzte Richtungen weisenden Ableiterfahnen der jeweils gebündelten positiven und negativen Elektrodenplatten;
- Figur 3 -: Schnittansicht eines Elektrodenplattenstapels einer Zelle mit abgelängten Ableiterfahnenbündeln;
- Figur 4 -: Seitenansicht einer Zelle mit Aufnahmekonturen an den Ableiterfahnenbündeln;
- Figur 5 -: Seitenansicht einer Zelle mit dem Schritt des Aufsetzens von Polableitern auf die Aufnahmekontur der Ableiterfahnenbündel;
- Figur 6 -: - Querschnittsansicht der Zelle aus Figur 5;
- Figuren 7a bis 7c -: Seitenansicht, Draufsicht und Querschnittsansicht des Polableiters aus den Figuren 5 und 6;
- Figuren 8a bis 8c -: Seitenansicht, Draufsicht und Querschnittsansicht eines als Zellverbinder ausgebildeten Polableiters;
- Figur 9 -: Seitenansicht eines aufgeschnittenen Akkumulators mit vier Zellen, die mit einem Zellverbinder gemäß Figur 8 miteinander verschaltet sind.

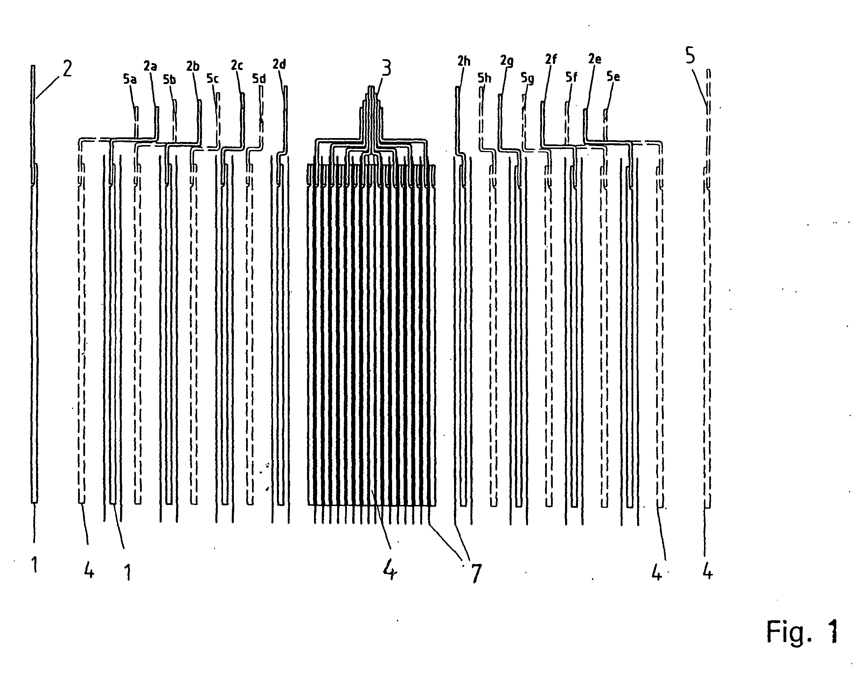

Die Figur 1 lässt positive Elektrodenplatten 1 mit elektrisch leitend daran angeformten Ableiterfahnen 2 erkennen. Die Ableiterfahnen 2 werden so abgewinkelt, dass die Ableiterfahnen 2a bis 2h der gestapelten positiven Elektrodenplatten 1 einer Zelle zu einem Ableiterfahnenbündel 3 zusammengefasst sind und dort aneinander elektrisch leitend angrenzen.

In entsprechender Weise sind die negativen Elektrodenplatten 4 einer Zelle mit elektrisch leitend daran angeformten Ableiterfahnen 5 versehen. Diese Ableiterfahnen 5a bis 5 h sind zu einem Ableiterfahnenbündel 6 zusammengefasst.

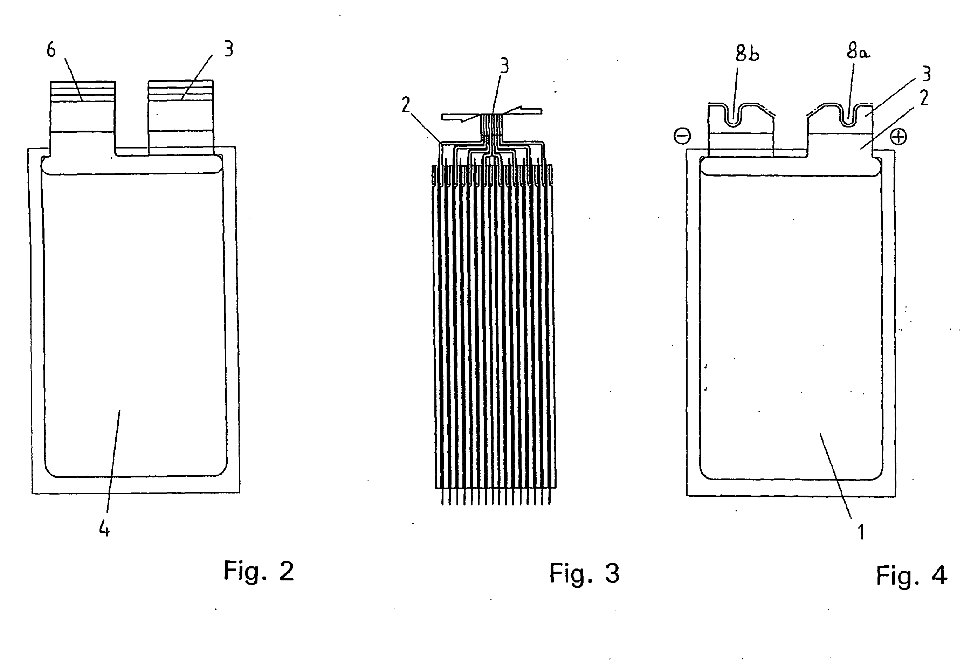

Wie aus der Figur 2 in der Seitenansicht einer Zelle ersichtlich ist das Ableiterfahnenbündel 3 der positiven Elektrodenplatten 1 entgegengesetzt zu dem Ableiterfahnenbündel 6 der negativen Elektrodenplatten 4 ausgerichtet, so dass die Ableiterfahnenbündel 3, 6 unabhängig voneinander kontaktiert werden können.

Aus der Figur 1 ist weiterhin deutlich, dass die nebeneinander liegenden positiven Elektrodenplatten 1 und negativen Elektrodenplatten 4 voneinander durch faserförmige Separatoren 7 getrennt sind.

Nach dem Schritt des Abkantens der Ableiterfahnen 2, 5 und Zusammenfassung zu Ableiterfahnenbündeln 3, 6 erfolgt der in der Figur 3 aus der Schnittansicht erkennbare Schritt des Ablängens der Ableiterfahnenbündel 3, 6 derart, dass jedes Ableiterfahnenbündel 3, 6 eine ebene Anschlussfläche erhält.

Aus der Figur 4 wird deutlich, dass nach dem Ablängen der Ableiterfahnenbündel 3, 6 eine schlitzartige Ausnehmung mit einer U-förmigen Kontur 8a, 8b in die Ableiterfahnenbündel 3, 6 beispielsweise durch Laserschneiden eingebracht wird.

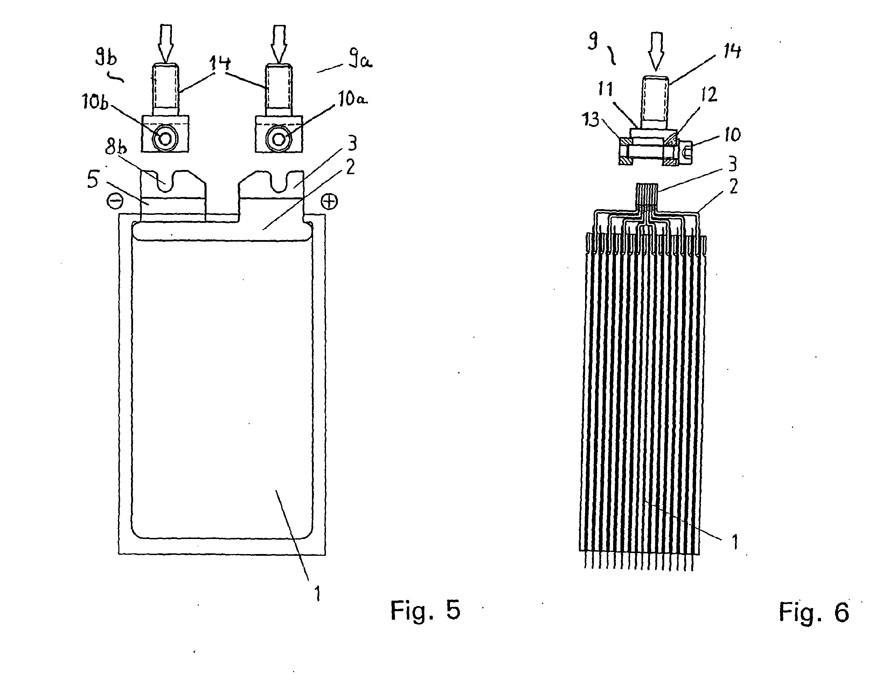

Die Figur 5 lässt eine Seitenansicht auf eine Zelle mit dem darauffolgenden Schritt des Aufsetzens von Polableitern 9a, 9b auf die Ausnehmung der Ableiterfahnenbündel 3, 6 der positiven und negativen Elektrodenplattengruppen erkennen, wobei eine Spannschraube 10a, 10b des Polableiters 9a, 9b in die U-förmige Kontur 8a, 8b des zugeordneten Ableiterfahnenbündels 3, 6 hineingleitet.

Aus der Querschnittsansicht der Figur 6 ist der Aufbau der Polableiter 9a, 9b mit einer abgewinkelten L-förmigen Anlageplatte 11 erkennbar. Der erste Schenkel 12 der Anlageplatte 11 bildet eine Spannplatte zur Anlage an ein Ableiterfahnenbündel 3, 6, während der zweite Schenkel zur Führung einer relativ zu dem ersten Schenkel 12 mit Hilfe der Spannschraube 10 beweglichen Spannplatte 13 dient. Nach dem Aufsetzen des Polableiters 9 auf ein Ableiterfahnenbündel 3, 6 kann somit durch Drehen der Schraube 10 der aus der abgewinkelten Anlageplatte 11 mit dem erstem Schenkel 12 und der Spannplatte 13 gebildete Klemmschuh auf das Ableiterfahnenbündel 3, 6 gepresst werden, so dass eine dauerhafte hochleitfähige elektrische Verbindung sichergestellt ist.

Vor dem zweiten Schenkel der abgewinkelten Ablageplatte 11 ragt senkrecht ein Polbolzen 14 zur äußeren Kontaktierung des positiven bzw. negativen Elektrodenplattenstapels hervor. Der Polbolzen 14 kann durch eine geeignete Anordnung von Isolier-, Dichtungs- und Schraubelementen flüssigkeits- und gasdicht durch ein Zellengehäuse geführt werden.

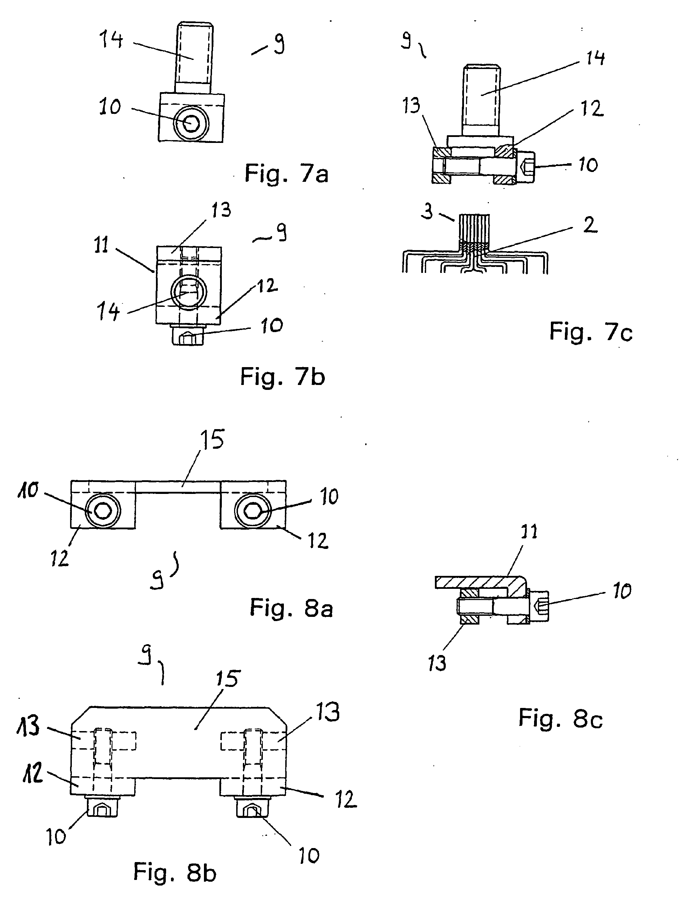

Die Figuren 7a bis 7c lassen einen Polableiter 9 in der Ausführungsform mit Polbolzen 14 in der Seitenansicht, Draufsicht und Querschnittsansicht erkennen. Dabei wird deutlich, dass der Polbolzen 14 integral mit dem zweiten Schenkel der abgewinkelten Anlageplatte 11 geformt ist und senkrecht davon nach oben hervorragt. Es ist auch erkennbar, dass die durch den ersten Schenkel 12 geführte Spannschraube 10 sich parallel zu der Haupterstreckungsrichtung der L-förmigen Anlageplatte 11 erstreckt. An dem von dem ersten Schenkel 12 entgegengesetzten Ende der Spannschraube 10 ist die Spannplatte 13 aufgeschraubt und kann durch den zweiten Schenkel der Anlageplatte 11 geführt in Richtung zu dem ersten Schenkel 12 verschoben werden.

Die Figuren 8a bis 8c lassen eine andere Ausführungsform eines Polableiters 9 als Zellverbinder erkennen. Der Klemmschuh des Polableiters 9 ist wiederum durch die abgewinkelte Anlageplatte 11, die durch den ersten Schenkel 12 geführte Spannschraube 10 und die Spannplatte 13 gebildet. In der Ausführungsform sind jedoch zwei Polableiter 9a, 9b elektrisch leitend integral mit einem Zellverbinderelement 15 verbunden. Das heißt, dass die Polableiter für zwei zugeordnete Elektrodenplattenstapel unterschiedliche, vorzugsweise angrenzender Zellen ein gemeinsames Element sind.

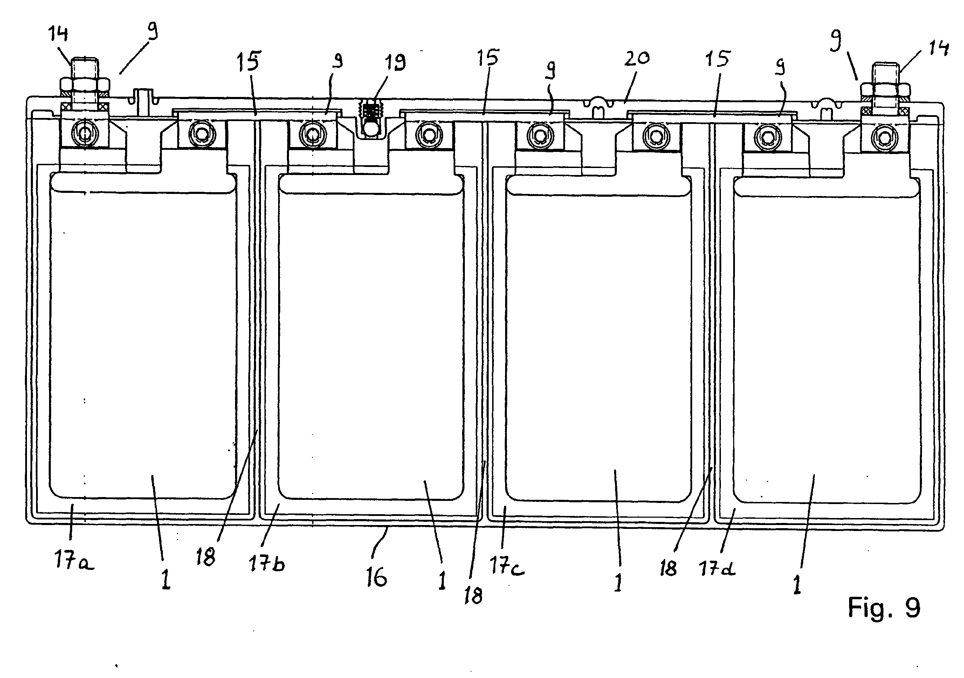

Die Serienverschaltung von Zellen eines vielzelligen Akkumulators mit dem als Zellverbinder ausgeführten Polableitern 9 ist in der Figur 9 erkennbar, die eine Seitenansicht eines aufgeschnittenen Akkumulators 16 mit vier Zellen 17a, 17b, 17c und 17d zeigt. Es ist erkennbar, dass die mit den äußeren Elektrodenplattengruppen verbundenen Polableiter 9 mit Polbolzen 14 ausgeführt sind, um den Akkumulator 16 nach außen elektrisch zu kontaktieren. Die positiven und negativen Elektrodenplattengruppen angrenzender Zellen 17 werden hingegen mit Polableitern 9 elektrisch leitend miteinander verbunden, die als Zellverbinder mit sich oberhalb der Zelltrennwände 18 zwischen den Zellen 17 erstreckenden Zellverbinderelementen 15 ausgeführt sind.

Der Akkumulator 16 kann weiterhin in bekannter Weise ein Entgasungsventil 19 in dem Akkumulatordeckel 20 haben.

## Patentansprüche

1. Akkumulator (16) mit einer Mehrzahl von Zellen (17a - d), die jeweils eine Vielzahl alternierend nebeneinander und mit Separatoren (7) elektrisch getrennt voneinander angeordnete positive und negative Elektrodenplatten (1, 4) mit Ableiterfahnen (2, 5) haben, wobei die gebündelten Ableiterfahnen (2) der positiven Elektrodenplatten (1) einer Zelle (17) elektrisch miteinander verbunden und mit einem Polableiter (9) versehen sind und die gebündelten Ableiterfahnen (5) der negativen Elektrodenplatten (4) einer Zelle (17) elektrisch miteinander verbunden und mit einem Polableiter (9) versehen sind, **dadurch gekennzeichnet, dass** die gebündelten Ableiterfahnen (2, 5) eine schlitzartige Ausnehmung mit U-förmiger Kontur (8) zur Aufnahme eines auf das Ableiterfahnenbündel (3, 6) aufsetzbaren Polableiters (9) haben und der Polableiter (9) einen Klemmschuh mit zwei relativ zueinander mit einer Spannschraube (10) beweglichen Spannplatten (12, 13) hat, wobei die Spannschraube (10) in die U-förmige Kontur (8) der schlitzartigen Ausnehmung des Ableiterfahnenbündels (3, 6) einsteckbar ist.

2. Akkumulator (16) nach Anspruch 1, **dadurch gekennzeichnet, dass** der Polableiter (9) eine abgewinkelte Anlageplatte (11) hat, wobei ein erster Schenkel (12) der Anlageplatte (11) eine Spannplatte bildet und eine Bohrung zur Aufnahme der Spannschraube (10) hat, und wobei der andere zweite Schenkel integral mit einem senkrecht von dem zweiten Schenkel hervorragenden Polbolzen (14)
oder integral mit einem sich quer von dem zweiten Schenkel weg erstreckenden Zellverbinderelement (15) verbunden ist.

3. Akkumulator (16) nach einem der Ansprüche 1 oder 2, **dadurch gekennzeichnet, dass** der Polableiter (9) als Zellverbinder für zwei Elektrodenplattengruppen zugeordneter Zellen (17) mit jeweils einer abgewinkelten Anlageplatte (11) pro Zelle (17) ausgebildet ist, die einen ersten eine Spannplatte bildenden Schenkel (12) mit einer Bohrung zur Aufnahme der Spannschraube (10) und einen sich rechtwinklig zum ersten Schenkel (12) erstreckenden zweiten Schenkel hat, wobei die zweiten Schenkel der beiden Anlageplatten (11) eines Polableiters (9) integral mit einem die beiden zweiten Schenkel verbindenden und sich quer von dem zweiten Schenkel weg erstreckenden Zellverbinderelement (15) geformt sind.

4. Verfahren zur Herstellung eines Akkumulators (16) nach einem der vorhergehenden Ansprüche mit den Schritten:
- alternierendes Anordnen von positiven und negativen Elektrodenplatten (1, 4) nebeneinander, jeweils getrennt mit einem Separator (7) voneinander zur Bildung eines Elektrodenplattenstapels pro Zelle (17);
- Abkanten der gleichförmigen integral mit den Elektrodenplatten (1, 4) verbundenen Ableiterfahnen (5) zur Bildung von Ableiterfahnenbündeln (3, 6) für die positiven Elektrodenplatten (1, 4) einer Zelle (17) und für die negativen Elektrodenplatten (1, 4) einer Zelle (17);
**gekennzeichnet durch**
- Ablängen der Ableiterfahnenbündel (3, 6) derart, dass jedes Ableiterfahnenbündel (3, 6) eine ebene Anschlussfläche erhält;
- Einbringen von schlitzartigen Ausnehmungen mit U-förmiger Kontur (8) in die Ableiterfahnenbündel;
- Einsetzen eines Polableiters (9) auf ein zugeordnetes Ableiterfahnenbündel (3, 6) mit einem Klemmschuh, der zwei relativ zueinander mit einer Spannschraube (10) bewegliche Spannplatten (12, 13) hat, und
- Anpressen der Spannplatten (12, 13) mit Hilfe der Spannschraube (10) an das zugeordnete Ableiterfahnenbündel (3, 6).

## Claims

1. Rechargeable battery (16) having a plurality of cells (17a-d) which each have a plurality of positive and negative electrode plates (1, 4) which are arranged alternately alongside one another and are electrically isolated from one another by separators (7) and having output lugs (2, 5), with the bundled output lugs (2) of the positive electrode plate (1) of a cell (17) being electrically connected to one another and being provided with a pole output conductor (9), and the bundled output lugs (5) of the negative electrode plates (4) of a cell (17) being electrically connected to one another and being provided with a pole output conductor (9), **characterized in that** the bundled output lugs (2, 5) have a slot-like recess with a U-shaped contour (8) for holding a pole output conductor (9) which can be fitted to the output lug bundle (3, 6), and the pole output conductor (9) has a clamping shoe with two clamping plates (12, 13) which can be moved relative to one another by means of a clamping screw (10) in which case the clamping screw (10) can be inserted into the U-shaped contour (8) of the slot-like recess in the output lug bundle (3, 6).

2. Rechargeable battery (16) according to Claim 1, **characterized in that** the pole output conductor (9) has an angled contact plate (11), with a first limb (12) of the contact plate (11) forming a clamping plate and having a hole for holding the clamping screw (10), and with the other second limb being integrally connected to a pole bolt (14) which projects at right angles from the second limb, or being integrally connected to a cell connector element (15) which extends transversely away from the second limb.

3. Rechargeable battery (16) according to one of Claims 1 or 2, **characterized in that** the pole output conductor (9) is in the form of a cell connector for cells (17) which are associated with two electrode plate groups and each have an angled contact plate (11) for each cell (17), which contact plate (11) has a first limb (12), which forms a clamping plate, with a hole for holding the clamping screw (10), and has a second limb which extends at right angles to the first limb (12), with the second limbs of the two contact plates (11) of a pole output conductor (9) being formed integrally with a cell connector element (15) which connects the two second limbs and extends transversely away from the second limb.

4. Method for production of a rechargeable battery (16) according to one of the preceding claims, having the following steps:
- alternating arrangement of positive and negative electrode plates (1, 4) alongside one another, in each case isolated from one another by a separator (7) in order to form an electrode plate stack for each cell (17);
- tilting of the uniform output lugs (5), which are integrally connected to the electrode plates (1, 4), in order to form output lug bundles (3, 6) for the positive electrode plates (1, 4) of a cell (17) and for the negative electrode plates (1, 4) of a cell (17);
**characterized by**
- the output lug bundles (3, 6) being cut to length such that each output lug bundle (3, 6) is provided with a flat connecting surface;
- introduction of slot-like recesses with a U-shaped contour (8) into the output lug bundles;
- insertion of a pole output conductor (9) onto an associated output lug bundle (3, 6) with a clamping shoe which has two clamping plates (12, 13) which can be moved relative to one another by means of a clamping screw (10), and
- pressing of the clamping plates (12, 13) against the associated output lug bundle (3, 6) by means of the clamping screw (10).

## Revendications

1. Accumulateur (16) comportant plusieurs cellules (17a-d) ayant chacune de nombreuses électrodes-plaques (1, 4) munies de pattes de branchement (2, 5), ces plaques positives et négatives étant juxtaposées en alternance en étant séparées électriquement par des séparateurs (7),
les pattes de branchement (2) des électrodes-plaques (1), positives, regroupées appartenant à une cellule (17) étant reliées électriquement les unes aux autres pour recevoir une borne polaire (9) et les pattes de branchement (5), regroupées des électrodes-plaques (4) négatives d'une cellule (17), étant reliées électriquement les unes aux autres et avec une borne polaire (9),
**caractérisé en ce que**
les pattes de branchement (2, 5), regroupées, ont une découpe en forme de fente à contour (8) en U pour recevoir une borne polaire (9) qui s'installe sur le faisceau de pattes de branchement (3, 6), et la borne polaire (9) comporte un patin de serrage muni de deux plaques de serrage (12, 13) mobiles l'une par rapport à l'autre avec une vis de serrage (10),
la vis de serrage (10) s'engageant dans la découpe en forme de fente en U (8) du faisceau de pattes de branchement (3, 6).

2. Accumulateur (16) selon la revendication 1,
**caractérisé en ce que**
la borne polaire (9) comporte une plaque d'appui (11), repliée, dont une première branche (12) forme une plaque de serrage munie d'un perçage pour recevoir la vis de serrage (10) et la seconde branche fait corps avec le goujon polaire (14) en saillie de la seconde branche ou faisant corps avec un élément de liaison de cellule (15) partant transversalement de la seconde branche.

3. Accumulateur (16) selon la revendication 1 ou 2,
**caractérisé en ce que**
la borne polaire (9) est réalisée sous la forme d'organes de liaison de cellules pour des cellules (17) associées à deux groupes d'électrodes-plaques avec chaque fois une plaque d'appui (11) repliée par cellule (17) qui comporte une première branche (12) formant une plaque de serrage munie d'un perçage pour recevoir la vis de serrage (10) et une seconde branche perpendiculaire à la première branche (12),
les secondes branches des deux plaques d'appui (11) d'une borne polaire (9), faisant corps avec un élément de liaison de cellule (15) reliant les deux secondes branches et s'écartant de la seconde branche.

4. Procédé de fabrication d'un accumulateur (16) selon les revendications précédentes, comprenant les étapes suivantes :
- installation alternée d'électrodes-plaques (1, 4) positives et négatives en les juxtaposant en les séparant chaque fois par un séparateur (7) pour former une pile de plaques d'électrodes par cellule (17),
- repliage des pattes de branchement (5) de même forme, faisant partie intégrante des électrodes-plaques (1, 4) pour former des faisceaux de pattes de branchement (3, 6) pour les électrodes-plaques positives (1, 4) d'une cellule (17) et pour les électrodes-plaques négatives (1, 4) d'une cellule (17),
**caractérisé par**
- le dimensionnement de la longueur des faisceaux de pattes de branchement (3, 6) pour que chacun des faisceaux de pattes de branchement (3, 6) possède une surface de branchement plane,
- la réalisation de découpes en forme de fentes à contour en U, (8) dans le faisceau de pattes de branchement,
- la mise en place d'une borne polaire (9) sur un faisceau de pattes de branchement (3, 6) correspondant avec un patin de serrage ayant deux plaques de serrage (12, 13) mobiles l'une par rapport à l'autre et qui sont commandées par une vis de serrage (10), et par
- l'application sous pression des plaques de serrage (12, 13) à l'aide de la vis de serrage (10) contre le faisceau de pattes de branchement (3, 6) correspondant.
